# EUROPEAN PATENT APPLICATION

(11) **EP 4 361 065 A1**
(43) Date of publication of application: **01.05.2024**
(21) Application number: 22828116.8
(22) Date of filing: 24.05.2022
(51) Int. Cl.: B65G 1/04

(54) **TRANSPORT VEHICLE SYSTEM**

(30) Priority: 24.06.2021 JP 2021104694
(71) Applicant: Murata Machinery, Ltd., Kyoto-shi, Kyoto 601-8326 (JP)
(72) Inventor: WADA, Eiji, Inuyama-shi, Aichi 484-8502 (JP)
(74) Representative: Weickmann & Weickmann PartmbB
(86) International application number: PCT/JP2022/021242
(87) International publication number: WO 2022/270197

(57) **Abstract**

[Problem] To measure and quantify the machine difference for each transport vehicle under the same conditions even if the height of a track changes, and to share teaching information among a plurality of transport vehicles.

[Means to Solve Problem] The transport vehicle system may include a shelf that includes a shelf board on which an article is placed. The transport vehicle system may include a plurality of transport vehicles each including a transferer that travels on a track provided on a ceiling and transfers an article onto the shelf board. The transport vehicle system may include a detector that is supported by the transferer and detects the shelf board. The transport vehicle system may include a teaching information generator that generates teaching information relating to a transfer position on the shelf board, using a result of detecting the shelf board yielded by the detector. The transport vehicle system may include a structure for a measuring machine difference for the plurality of transport vehicles. The structure includes an index that is suspended from the track or the ceiling and can be detected by the detector.

## Description

### Technical Field

The present invention relates to a transport vehicle system.

### Background Art

In a transport vehicle system, in order to accurately transfer an article to a transfer position in a shelf, it is necessary to generate teaching information relating to the transfer position in the shelf and to teach the teaching information to a transport vehicle (for example, see Patent Literature 1). In the transport vehicle system disclosed in Patent Literature 1, when generating teaching information, a shelf provided on the floor is used, and the three-dimensional coordinates of a shelf board of the shelf are measured.

### Citation List

### Patent Literature

[Patent Literature 1] Japanese Unexamined Patent Application, First Publication No. 2018-115062

### Summary of Invention

### Technical Problem

In some cases, a transport vehicle system may use a plurality of transport vehicles that travel on a track provided on a ceiling of a building. In a transport vehicle system that uses a plurality of transport vehicles, it is conceivable to measure the three-dimensional coordinates of a shelf board using one transport vehicle, generate teaching information on the basis of the measurement result, and share the teaching information among the plurality of transport vehicles. Here, transport vehicle machine difference varies for each transport vehicle. Therefore, in a transport vehicle system using a plurality of transport vehicles, it is necessary to measure and quantify machine difference for each vehicle.

Incidentally, the height of a track changes according to the conditions of the building, such as expansion and contraction of steel frames due to seasonal temperature changes and deflection of the ceiling caused by deposited snow. Meanwhile, machine difference measurement for each transport vehicle is performed regardless of the conditions of the building, such as the timing for adding a transport vehicle to the transport vehicle system and the timing for returning a transport vehicle to the transport vehicle system after maintenance. That is to say, the timing for measuring a machine difference may vary for each transport vehicle.

The transport vehicle system disclosed in Patent Literature 1 measures and quantifies the machine difference of a transport vehicle, using the shelf provided on the floor. Therefore, if the height of the track changes according to the condition of the building, the positional relationship between the transport vehicle and the shelf will change for each transport vehicle. Therefore, in the transport vehicle system disclosed in Patent Literature 1, if the timing for measuring the machine difference of a transport vehicle differs, there will be a possibility that the machine difference cannot be measured and quantified under the same conditions for each transport vehicle.

### Means for Solving Problem

In an aspect of the present invention, a transport vehicle system is provided. The transport vehicle system may include a shelf that includes a shelf board on which an article is placed. The transport vehicle system may include a plurality of transport vehicles each including a transferer that travels on a track provided on a ceiling and transfers an article onto the shelf board. The transport vehicle system may include a detector that is supported by the transferer and detects the shelf board. The transport vehicle system may include a teaching information generator that generates teaching information relating to a transfer position on the shelf board, using a result of detecting the shelf board yielded by the detector. The transport vehicle system may include a structure to measure machine differences for the plurality of transport vehicles. The structure includes an index that is suspended from the track or the ceiling and can be detected by the detector.

### Advantageous Effects of the Invention

According to an aspect of the present invention, even if the timing for measuring the machine difference for a transport vehicle changes and the height of a track changes according to the situation of the building, it is possible to measure and quantify the machine difference under the same conditions for each transport vehicle.

The detector may be detachably supported by the transferer. According to such an aspect, the transport vehicle can be operated with the detector removed.

The shelf may be provided on a floor. According to such an aspect, the load applied to the track or the ceiling can be suppressed compared to the mode in which the shelf is suspended from the track or the ceiling.

The transport vehicle system may include an anti-sway mechanism to prevent horizontal swaying of a lower part of the structure. According to such an aspect, it is possible to prevent detection of the index from being hindered due to the swaying of the structure.

The anti-sway mechanism may include a bracket fixed to the floor. The anti-sway mechanism may include a roller arranged between the bracket and the structure. The anti-sway mechanism may allow the structure to move in the up-down direction relative to the bracket. According to such an aspect, even if the height of the track changes, it is possible to suppress unnecessary force from being applied to the structure.

The detector includes a plurality of imagers. The plurality of imagers may capture images of the index from positions different from each other. According to such an aspect, it is possible to perform calculation using the stereo imaging method.

The teaching information generator may generate the teaching information by correcting a result of detecting the shelf board yielded by the detector in one transport vehicle, using the machine difference of the one transport vehicle. According to such an aspect, in a plurality of transport vehicles including the one transport vehicle, it is possible to use teaching information that is not affected by the machine difference of the one transport vehicle.

The structure may include a strut suspended from the track or the ceiling. The structure may include a plurality of reference boards extending horizontally from the strut. Each of the plurality of reference boards may be provided at a position corresponding to a height of the shelf board. The index may be provided on each of the plurality of reference boards. According to such an aspect, it is possible to generate teaching information corresponding individually to each shelf board.

The track may include a transport route along which the transport vehicle transports an article. The track may include an extension route extending away from the transport route. The structure may be provided at a position corresponding to a part of the extension route. According to such an aspect, it is possible to prevent provision of the structure from posing a limitation on the region where the shelf is provided.

A specific region for performing maintenance on the transport vehicle may be provided in a region including a part of the extension route. The structure may be provided in the specific region. According to such an aspect, when maintenance has been performed on the transport vehicle, it is possible to re-detect the index in the specific region where the maintenance was performed.

It should be noted that the above summary of the invention does not necessarily describe all necessary features of the present invention but that the invention may also reside in a sub-combination of the described features.

### Brief Description of the Drawings

Fig. 1 is a diagram showing an example of a transport vehicle system 100 according to an embodiment of the present invention.
Fig. 2 is a diagram showing a configuration example of a shelf 120.
Fig. 3 is a diagram showing a configuration example of a transport vehicle 130.
Fig. 4 is a diagram showing a configuration example of the transport vehicle 130.
Fig. 5 is a diagram showing a configuration example of a detector 170.
Fig. 6 is a diagram showing a configuration example of the detector 170.
Fig. 7 is a diagram showing a configuration example of a structure 150.
Fig. 8 is a diagram showing a configuration example of an anti-sway mechanism 180.
Fig. 9 is a diagram showing a configuration example of the anti-sway mechanism 180 shown in Fig. 8 along a cross-section A-A.
Fig. 10 is a diagram showing a configuration example of a transport control unit 134.
Fig. 11 is a diagram showing a configuration example of an imaging control unit 173.
Fig. 12 is a diagram showing a configuration example of the teaching information generator 140.
Fig. 13 is a diagram showing a configuration example of layout data relating to the structure 150.
Fig. 14 is a diagram showing a configuration example of machine difference data.
Fig. 15 is a diagram showing a configuration example of teaching data.
Fig. 16 is a diagram showing an operation example of imaging an index 152A and an index 152B provided on a reference board 152 of the structure 150.
Fig. 17 is a diagram showing an operation example of imaging an index 124A and an index 124B provided on a shelf board 124 of the shelf 120.
Fig. 18 is a diagram showing an operation example of performing a calculation for quantifying the machine difference of the transport vehicle 130.
Fig. 19 is diagram showing an operation example of calculating teaching information relating to a transfer position in the shelf 120.
Fig. 20 is a diagram showing an operation example of calculating three-dimensional coordinates of the shelf board 124 to be referenced when transporting an article G.

### Description of Embodiments

Hereinafter, the present invention will be described through embodiments of the invention. However, the invention defined in the claims is not limited to the following embodiments, and not all combinations of features described in the embodiments are essential to the means by which the present invention solves the above problems.

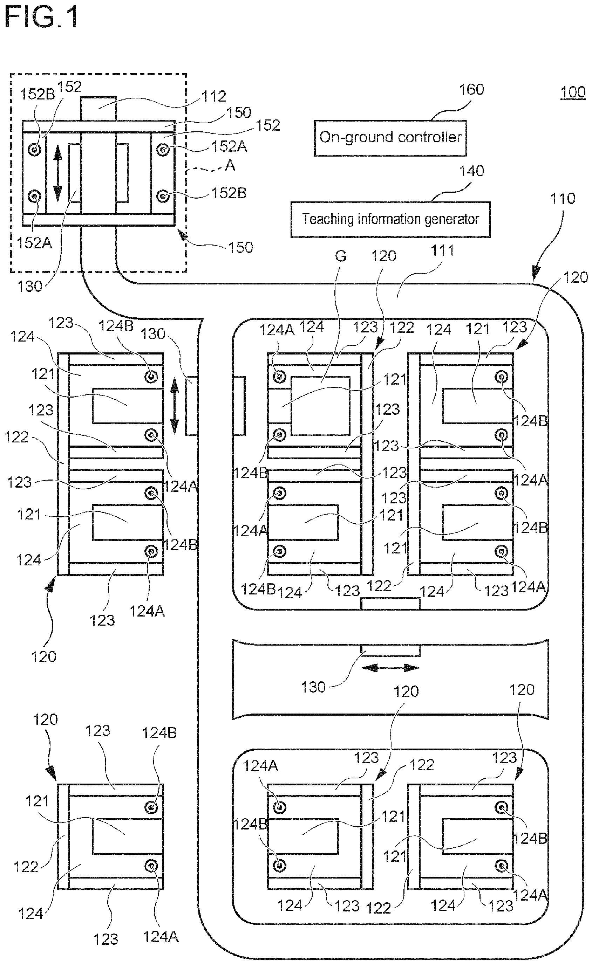

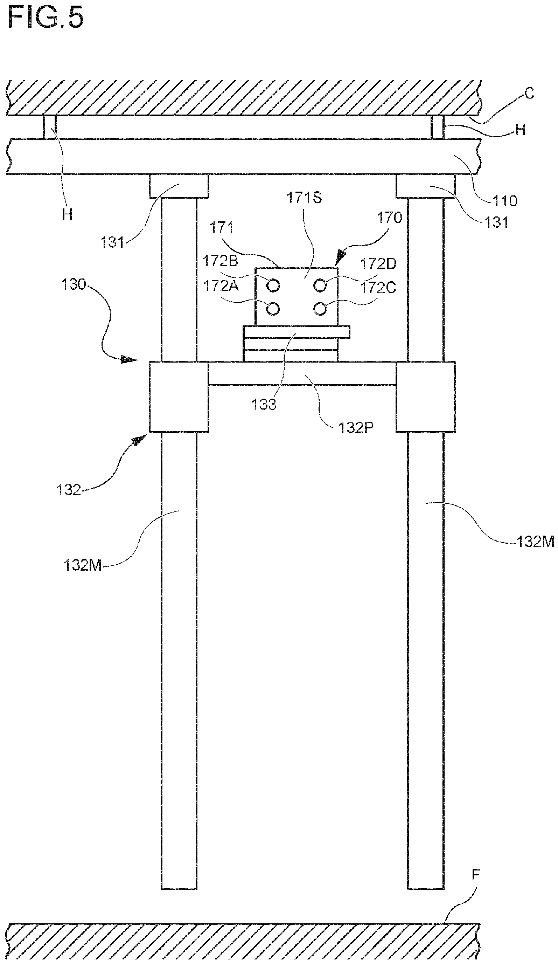

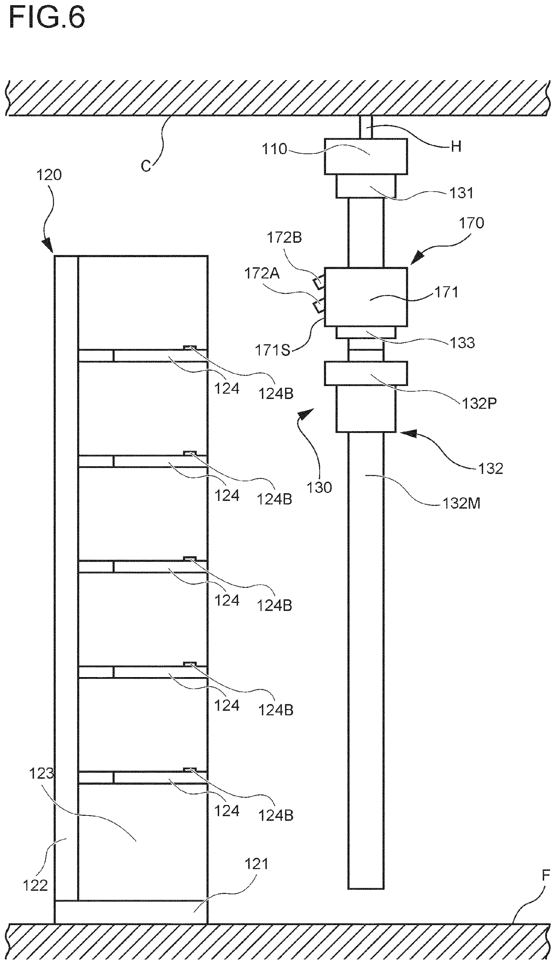

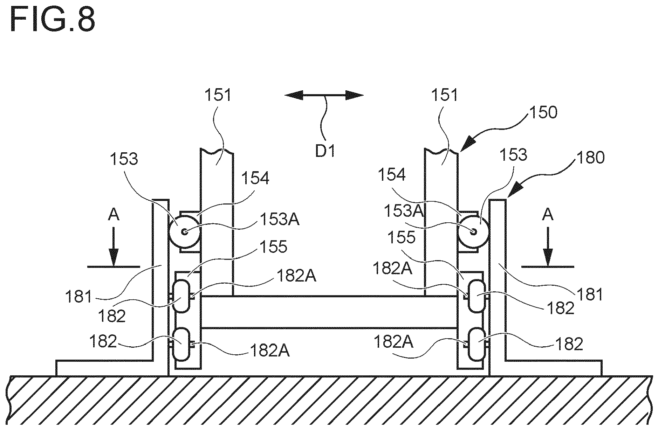

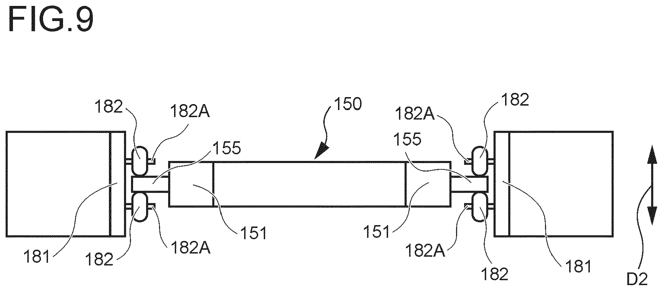

Fig. 1 is a diagram showing an example of a transport vehicle system 100 according to an embodiment of the present invention. The transport vehicle system 100 is a system that combines a plurality of unmanned transport vehicles and a device to manage and control the plurality of unmanned transport vehicles. The transport vehicle system 100 may also be called an unmanned transport vehicle system. The transport vehicle system 100 includes a track 110, a plurality of shelves 120, a plurality of transport vehicles 130, a teaching information generator 140, a structure 150, and an on-ground controller 160. The transport vehicle system 100 also includes a detector 170 shown in Fig. 5 and Fig. 6. The transport vehicle system 100 also includes an anti-sway mechanism 180 shown in Fig. 8 and Fig. 9.

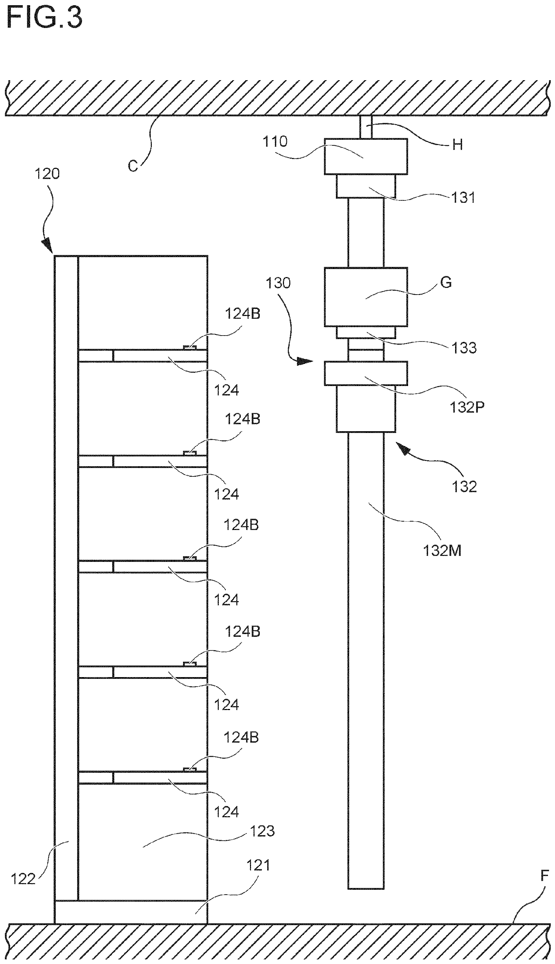

The track 110 is a guideway on which the transport vehicles 130 travel. As shown in Fig. 3 to Fig. 7, the track 110 is suspended from a ceiling C by means of hanging hooks H. The track 110 includes a transport route 111 and an extension route 112. The transport route 111 is a route along which the transport vehicle 130 transports an article G. The extension route 112 is an extension route extending away from the transport route 111. A specific region A for performing maintenance on a transport vehicle 130 is provided on the extension route 112.

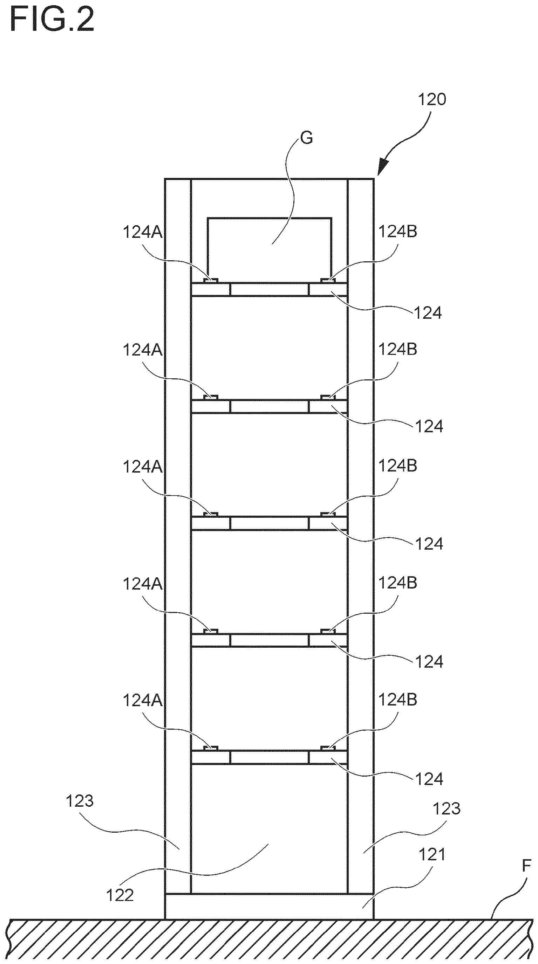

Fig. 2 is a diagram showing a configuration example of the shelf 120. The shelf 120 is provided on the floor F and is a device on which articles G are placed. In the following description, a face of the shelf 120 facing the track 110 is the front face of the shelf 120. The shelf 120 includes a bottom board 121, a back board 122, side boards 123, and a plurality of shelf boards 124.

The bottom board 121 is a board forming the bottom face of the shelf 120. The bottom board 121 is provided on the floor F. The back board 122 is a board forming the back face of the shelf 120. The back board 122 is provided perpendicular to the bottom board 121 on the back face of the shelf 120. The side boards 123 are boards forming the side faces of the shelf 120. The side boards 123 are provided perpendicular to the bottom board 121 on the side faces of the shelf 120. The shelf boards 124 are boards on which articles G are placed. Each shelf board 124 is laid level between the side boards 123. The plurality of shelf boards 124 each have two indices, namely, an index 124A and an index 124B.

The index 124A and the index 124B are markings that can be detected by the detector 170. The index 124A is provided at a position near the front face of the shelf 120, which is in a region on the left side of the center of the shelf board 124 when the structure 150 is viewed from the front. The index 124B is provided at a position near the front face of the shelf 120, which is in a region on the right side of the center of the shelf board 124 when the structure 150 is viewed from the front.

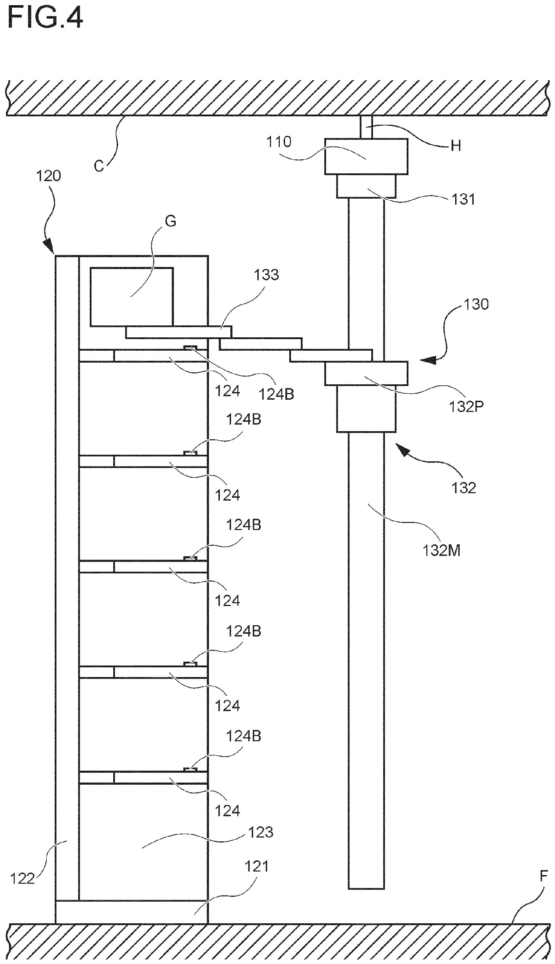

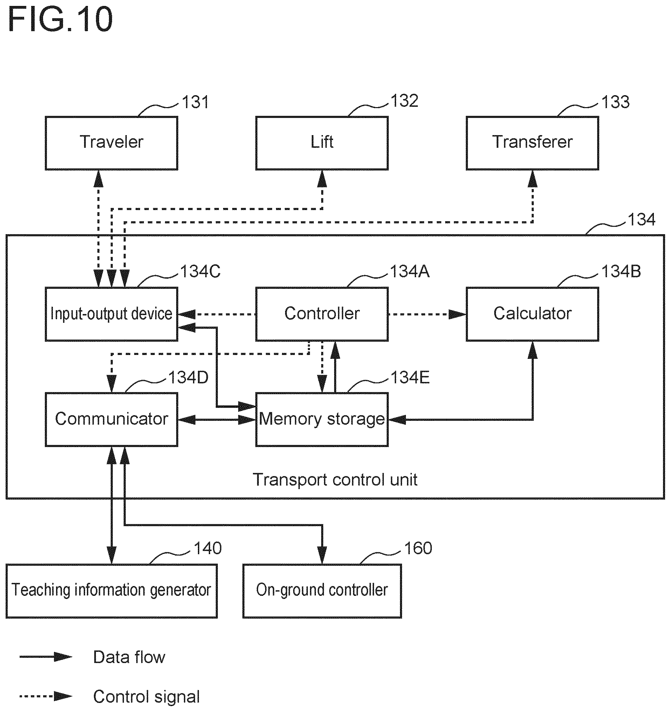

Fig. 3 and Fig. 4 are diagrams showing a configuration example of the transport vehicle 130. The transport vehicle 130 is a vehicle having functions of automatically traveling on the track 110 and transporting an article G. The transport vehicle 130 includes a traveler 131, a lift 132, and a transferer 133. The transport vehicle 130 also includes a transport control unit 134 shown in Fig. 10.

The traveler 131 is a device that causes the transport vehicle 130 to travel. The traveler 131 is provided so as to be able to travel on the track 110.

The lift 132 is a device that causes the transferer 133 to ascend and descend. The lift 132 includes masts 132M and an elevation platform 132P. Each mast 132M is a columnar member that is provided below the traveler 131A and extends in the up-down direction. The elevation platform 132P is a member that is supported by the masts 132M and ascends and descends relative to the masts 132M.

The transferer 133 is a device that transfers an article G between the shelf board 124 and the vehicle using an articulated arm that supports an article G. Here, the expression "transfer" refers to loading and unloading of an article G. The transferer 133 is provided above the elevation platform 132P. The transferer 133 folds the articulated arm as shown in Fig. 3 when not transferring. The transferer 133 extends the articulated arm as shown in Fig. 4 when transferring.

Fig. 10 is a diagram showing a configuration example of the transport control unit 134. The transport control unit 134 is a device provided on the vehicle to control the traveler 131, the lift 132, and the transferer 133. The transport control unit 134 includes a controller 134A, a calculator 134B, an input-output device 134C, a communicator 134D, and a memory storage 134E.

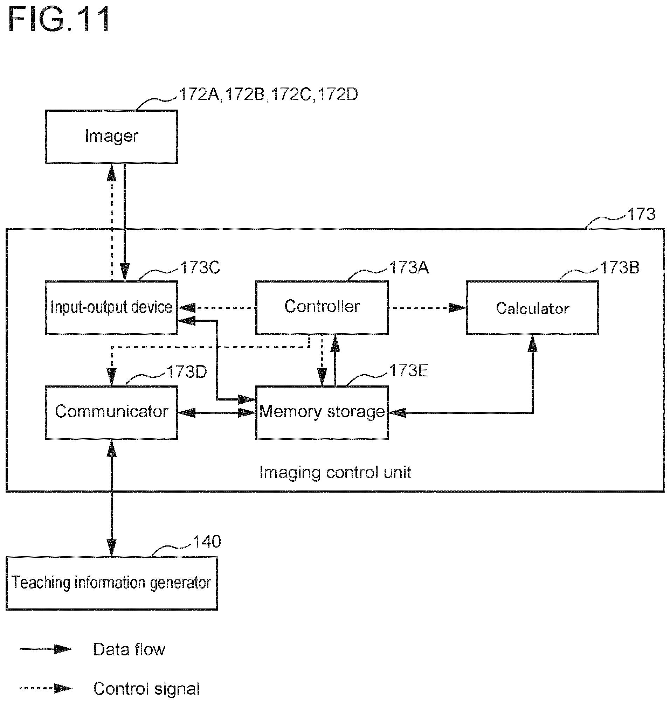

The controller 134A is a device mainly responsible for controlling operations of the calculator 134B, the input-output device 134C, the communicator 134D, and the memory storage 134E. For example, the controller 134A controls the operation of the calculator 134B when calculating the three-dimensional coordinates of a shelf board 124 to be referenced as an article G is transported. For example, the controller 134 controls the input-output device 134C when outputting to the traveler 131 a control signal relating to a traveling operation. For example, the controller 134 controls the input-output device 134C when outputting to the lift 132 a control signal relating to an ascending/descending operation. For example, the controller 134 controls the input-output device 134C when outputting to the transferer 133 a control signal relating to a transferring operation. For example, the controller 134A controls the communicator 134D when transmitting to the imaging control unit 173 shown in Fig. 11 command data to command an imaging operation. For example, the controller 134A controls the communicator 134D when transmitting to the on-ground controller 160 feedback data relating to an operation and control of the vehicle of its own.

The calculator 134B is a device that performs calculations such as arithmetic calculations and logical operations. For example, the calculator 134B performs a calculation to calculate the three-dimensional coordinates of the shelf board 124 referenced when an article G is transported.

The input-output device 134C is a device that receives signals input from the traveler 131, the lift 132, and the transferer 133. The input-output device 134C is a device that outputs signals to the traveler 131, the lift 132, and the transferer 133. For example, the input-output device 134C outputs to the traveler 131 a control signal relating to a traveling operation and receives from the traveler 131 an input of a feedback signal relating to the traveling operation. For example, the input-output device 134C outputs to the lift 132 a control signal relating to an ascending/descending operation and receives from the lift 132 an input of a feedback signal relating to the ascending/descending operation. For example, the input-output device 134C outputs to the transferer 133 a control signal relating to a transfer operation and receives from the transferer 133 an input of a feedback signal relating to the transfer operation.

The communicator 134D is a device connected to a terminal of a network in a communication system, and is a primary device that communicates with the imaging control unit 173, the teaching information generator 140, and the on-ground controller 160 shown in Fig. 11. For example, the communicator 134D transmits to the teaching information generator 140 command data to command an imaging operation, and receives from the teaching information generator feedback data relating to the imaging operation. For example, the communicator 134D also receives from the teaching information generator 140 machine difference data relating to machine difference of the vehicle of its own. For example, the communicator 134D also receives from the teaching information generator 140 teaching data relating to a transfer position in the shelf 120. For example, the communicator 134D receives from the on-ground controller 160 control data relating to an operation and control of the vehicle of its own, and transmits to the on-ground controller 160 feedback data relating to the operation and control.

The memory storage 134E is a device that stores data and programs. For example, the memory storage 134E stores control data relating to an operation and control of the vehicle of its own. For example, the memory storage 134E stores control data to calculate the three-dimensional coordinates of a shelf board 124 referenced when an article G is transported. For example, the memory storage 134E stores layout data relating to the structure 150, including design values of the three-dimensional coordinates of a reference board 152 in the structure 150. For example, the memory storage 134E stores layout data relating to the shelf 120, including design values of the three-dimensional coordinates of a shelf board 124 in the shelf 120. For example, the memory storage 134E stores machine difference data relating to the machine difference of the vehicle of its own. For example, the memory storage 134E stores teaching data relating to a transfer position in the shelf 120. For example, the memory storage 134E stores operation coordinates data relating to operation coordinates of a shelf board 124. Here, the operation coordinates are three-dimensional coordinates of a shelf board 124 referenced when an article G is transported.

Fig. 5 and Fig. 6 are diagrams showing a configuration example of the detector 170. The detector 170 is a device that detects a shelf board 124. The detector 170 can be mounted on and dismounted from the transferer 133 and is mounted on and supported by the transferer 133 when performing an operation to generate teaching information relating to a transfer position in the shelf 120. The detector 170 in the present embodiment includes a housing 171, and four imagers, namely, imagers 172A to 172D. The detector 170 also includes an imaging control unit 173 shown in Fig. 11.

The housing 171 includes an opposing face 171S that opposes the front face of the shelf 120 when a shelf board 124 is to be detected. The housing 171 is supported by the transferer 133 so that the opposing face 171S opposes the front face of the shelf when a shelf board 124 is to be detected.

The imagers 172A to 172D are devices that receive light from the outside through a lens using a photoreactive semiconductor element, convert the light into digital data, and record the digital data on a memory storage medium. The imagers 172A to 172D are also called digital cameras. The imagers 172A to 172D are provided on the opposing face 171S of the housing 171. The imager 172A and the imager 172B are provided at different heights in a region on the left side of the center of the opposing face 171S as viewed from the front of the opposing face 171S. When detecting a shelf board 124, the imager 172A and the imager 172B view the shelf 120 from the detector 170 and capture the index 124B provided in a region on the right side of the shelf board 124. The imager 172A and the imager 172B are provided at different height positions, and thus capture the index 124B from different positions. On the other hand, the imager 172C and the imager 172D are provided at different heights in a region on the right side of the center of the opposing face 171S as viewed from the front of the opposing face 171S. When detecting a shelf board 124, the imager 172C and the imager 172D view the shelf 120 from the detector 170 and capture the index 124A provided in a region on the left side of the shelf board 124. The imager 172C and the imager 172D are provided at different height positions, and thus capture the index 124A from different positions.

Fig. 11 is a diagram showing a configuration example of the imaging control unit 173. The imaging control unit 173 is a device provided in the housing 171 to control the imagers 172A to 172D. The imaging control unit 173 includes a controller 173A, a calculator 173B, an input-output device 173C, a communicator 173D, and a memory storage 173E.

The controller 173A is a device mainly responsible for controlling operations of the calculator 173B, the input-output device 173C, the communicator 173D, and the memory storage 173E. The controller 173A controls the input-output device 173C when outputting to the imagers 172A to 172D a control signal relating to an imaging operation. For example, the controller 173A controls the communicator 173D when transmitting to the transport control unit 134 feedback data relating to an imaging operation. For example, the controller 173A controls the communicator 173D when transmitting to the teaching information generator 140 image data captured by the imagers 172A to 172D.

The calculator 173B is a device that performs calculations such as arithmetic calculations and logical operations.

The input-output device 173C is a device that receives signals input from the imagers 172A to 172D. The input-output device 173C is also a device that outputs signals to the imagers 172A to 172D. For example, the input-output device 173C outputs to the imagers 172A to 172D a control signal relating to an imaging operation, and receives from the imagers 172A to 172D an input of image data captured through the imaging operation.

The communicator 173D is a device connected to a terminal of a network in a communication system, and is a primary device that communicates with the transport control unit 134 and the teaching information generator 140. For example, the communicator 173D receives from the transport control unit 134 command data to command an imaging operation, and transmits to the transport control unit 134 feedback data relating to the imaging operation. For example, the communicator 173D transmits to the teaching information generator 140 image data captured by the imagers 172A to 172D.

The memory storage 173E is a device that stores data and programs. For example, the memory storage 173E stores image data captured by the imagers 172A to 172D.

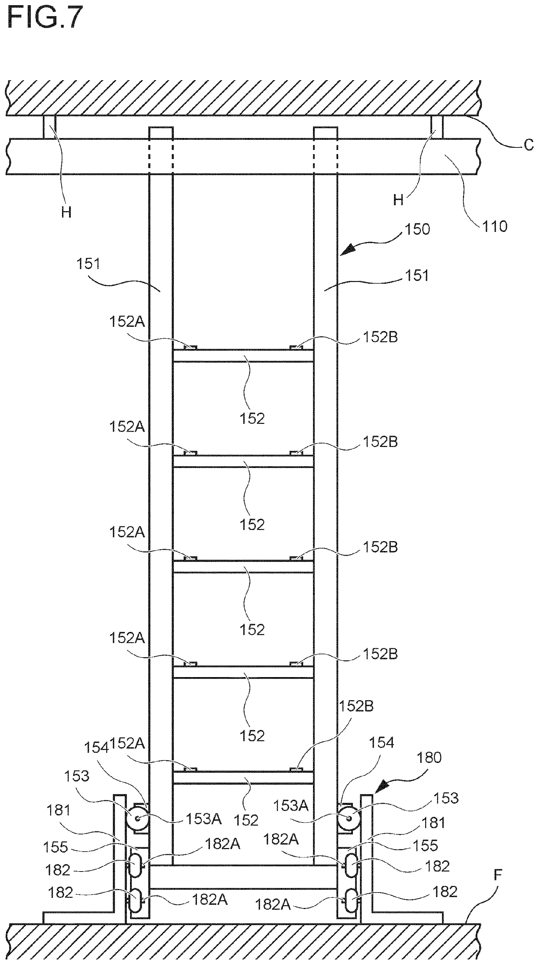

Fig. 7 is a diagram showing a configuration example of the structure 150. The structure 150 is an object to measure and quantify machine difference of a transport vehicle 130. The structure 150 is provided suspended from the track 110 at a position corresponding to a part of the extension route 112. The structure 150 shown in Fig. 1 is provided in the specific region A on the extension route 112. In the following description, a face of the structure 150 opposing the track 110 is the front face of the structure 150. The structure 150 includes struts 151 and a plurality of reference boards 152.

The struts 151 are columnar members that support the plurality of reference boards 152. The struts 151 are suspended from the track 110. Each reference board 152 is a horizontal member extending horizontally from the struts 151. The plurality of reference boards 152 are provided at positions corresponding respectively to transfer positions in the shelf 120. The positions corresponding to transfer positions are position that correspond to respective heights of the plurality of shelf boards 124 in the shelf 120. The plurality of reference boards 152 each have two indices, namely, an index 152A and an index 152B.

The index 152A and the index 152B are markings that can be detected by the detector 170. The index 152A is provided in a region on the left side of the center of the reference board 152 when the structure 150 is viewed from the front. The index 152B is provided in a region on the right side of the center of the reference board 152 when the structure 150 is viewed from the front. The imager 172A and the imager 172B of the detector 170 capture the index 152B provided in the right region of the reference board 152. The imager 172A and the imager 172B are provided at different height positions, and thus capture the index 152B from different positions. On the other hand, the imager 172C and the imager 172D of the detector 170 capture the index 152A provided in the left region of the reference board 152. The imager 172C and the imager 172D are provided at different height positions, and thus capture the index 152A from different positions.

Fig. 8 is a diagram showing a configuration example of the anti-sway mechanism 180. Fig. 9 is a diagram showing a configuration example of the anti-sway mechanism 180 shown in Fig. 8 along a cross-section A-A. The anti-sway mechanism 180 is a mechanism that prevents the lower part of the structure 150 from swaying in the horizontal direction. The anti-sway mechanism 180 includes brackets 181, a plurality of rollers 153, and a plurality of rollers 182.

The brackets 181 are structures fixed to floor F at positions near the structure 150. The rollers 153 and the rollers 182 are cylindrical rotating bodies that allow the structure 150 to move in the up-down direction relative to the brackets 181. The rollers 153 and the rollers 182 are arranged between the brackets 181 and the structure 150.

On each strut 151 of the structure 150, a plate 154 that supports the roller 153 is provided at a position opposing the bracket 181. The plate 154 has a plate face on the front side and on the back side of the structure 150. On the plate 154, a rotation axle 153A that supports the roller 153 is provided, with the axial direction thereof extending along the front-rear direction of the structure 150. The position of the rotation axle 153A is set so that the roller 153 comes in contact with the bracket 181 when the roller 153 is rotatably supported.

Incidentally, the height of the track 110 may change according to the conditions of the building, such as expansion and contraction of the steel frames due to seasonal temperature changes and deflection of the ceiling caused by deposited snow. Since the structure 150 is suspended from the track 110, it moves downward when the height of the track 110 is lowered, and moves upward when the height of the track 110 is restored from the lowered position.

In the anti-sway mechanism 180, each roller 153 rotates while being in contact with the bracket 181 when a force acts to move the structure 150 in the up-down direction. Therefore, the structure 150 is allowed to move in the up-down direction relative to the brackets 181.

In the anti-sway mechanism 180, each roller 153 is in contact with the bracket 181. Therefore, the lower part of the structure 150 is restricted from swaying in the left-right direction D1 of the structure 150.

On each strut 151 of the structure 150, a plate 155 sandwiched between the plurality of rollers 182 is provided at a position opposing the bracket 181. The plate 155 has a plate face on the front side and on the back side of the structure 150. On each bracket 181, a plurality of rotation axles 182A that support the roller 182 are provided, with the axial direction thereof extending along the left-right direction of the structure 150. The position of each rotation axle 182A is set so that the roller 182 comes in contact with the plate face of the plate 155 when the roller 182 is rotatably supported.

In the anti-sway mechanism 180, each roller 182 rotates while being in contact with the plate 155 when a force acts to move the structure 150 in the up-down direction. Therefore, the structure 150 is allowed to move in the up-down direction relative to the brackets 181.

In the anti-sway mechanism 180, the plate 155 is sandwiched between the plurality of rollers 182. Therefore, the lower part of the structure 150 is restricted from swaying in the front-rear direction D2 of the structure 150.

Returning to Fig. 1, the on-ground controller 160 is a device provided on the ground side to manage and control the operation of the transport vehicle 130.

The teaching information generator 140 is a device that is provided on the ground side to generate teaching information relating to a transfer position in the shelf 120, using a result of detecting the shelf 120 yielded by the detector 170. The teaching information generator 140 generates teaching information by correcting a result of detecting the shelf 120 yielded by the detector 170 in one transport vehicle 130, using the machine difference of the one transport vehicle 130.

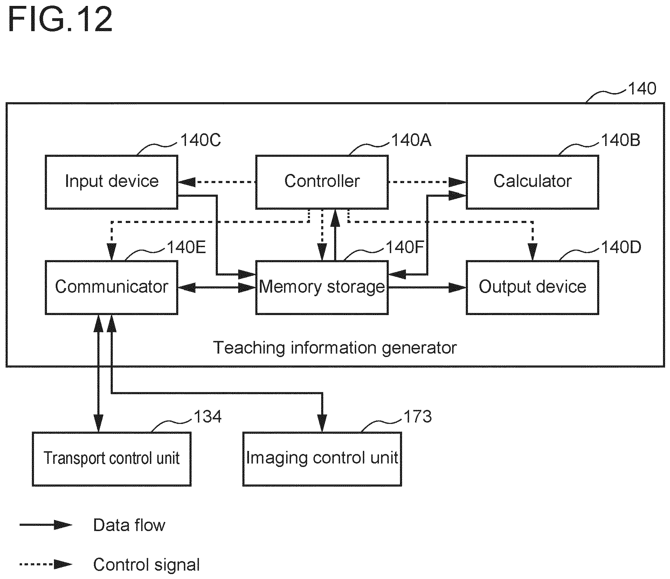

Fig. 12 is a diagram showing a configuration example of the teaching information generator 140. The teaching information generator 140 includes a controller 140A, a calculator 140B, an input device 140C, an output device 140D, a communicator 140E, and a memory storage 140F.

The controller 140A is a device mainly responsible for controlling operations of the calculator 140B, the input device 140C, the output device 140D, the communicator 140E, and the memory storage 140F. For example, the controller 140A controls the operation of the calculator 140B when calculating to quantify the machine difference of a transport vehicle 130. For example, the controller 140A controls the operation of the calculator 140B when calculating teaching information relating to a transfer position in the shelf 120. For example, the controller 140A controls the communicator 140E when transmitting to the transport control unit 134 the machine difference of a transport vehicle 130. For example, the controller 140A controls the communicator 140E when transmitting to the transport control unit 134 teaching data relating to a transfer position in the shelf 120.

The calculator 140B is a device that performs calculations such as arithmetic calculations and logical operations. For example, the calculator 140B calculates the three-dimensional coordinates of a reference board 152, on which the index 152A and index 152B are provided, from captured image data of the index 152A and index 152B. For example, the calculator 140B performs a calculation to quantify the machine difference of a transport vehicle 130. For example, the calculator 140B calculates teaching information relating to a transfer position in the shelf 120.

The input device 140C is a device that gives the teaching information generator 140 data, information, instructions, and so forth.

The output device 140D is a device that receives data from the teaching information generator 140 and physically presents it to the outside in a human-recognizable manner.

The communicator 140E is a device connected to a terminal of a network in a communication system, and is a primary device that communicates with the transport control unit 134 and the imaging control unit 173. For example, the communicator 140E receives from the imaging control unit 173 image data captured by the imagers 172A to 172D. For example, the communicator 140E transmits to the transport control unit 173 the machine difference of a transport vehicle 130. For example, the communicator 140E transmits to the transport control unit 134 teaching data relating to a transfer position in the shelf 120.

The memory storage 140F is a device that stores data and programs. For example, the memory storage 140F stores control data for calculating three-dimensional coordinates of a reference board, on which the index 152 and the index 152B are provided, the three-dimensional coordinates being calculated from the image data obtained by capturing the index 152A and the index 152B. For example, the memory storage 140F stores control data for performing a calculation to quantify the machine difference of a transport vehicle 130. For example, the memory storage 140F stores control data for calculating teaching information relating to a transfer position in the shelf 120. For example, the memory storage 140F stores coordinates data relating to the three-dimensional coordinates of a reference board 152, on which the index 152 and the index 152B are provided, the coordinates data being calculated from the image data obtained by capturing the index 152A and the index 152B. For example, the memory storage 140F stores layout data relating to the structure 150, including design values of the three-dimensional coordinates of the reference boards 152 in the structure 150. For example, the memory storage 140F stores image data captured by the imagers 172A to 172D. For example, the memory storage 140F stores machine difference data relating to the machine difference of a transport vehicle 130. For example, the memory storage 140F stores teaching data relating to a transfer position in the shelf 120.

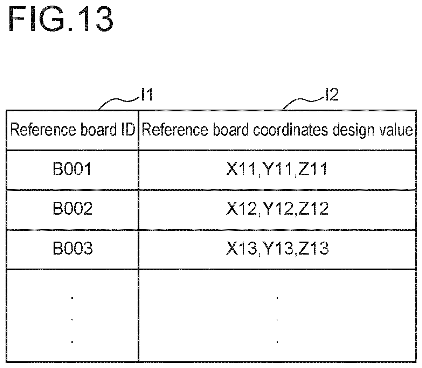

Fig. 13 is a diagram showing a configuration example of layout data relating to the structure 150 stored in the memory storage 140F of the teaching information generator 140 and the memory storage 134E of the transport control unit 134. In layout data relating to the structure 150, reference board ID information I1 is associated with reference board three-dimensional coordinates design value information I2.

The reference board ID information I1 is a code used to identify each of the plurality of reference boards 152. The reference board three-dimensional coordinates design value information I2 is a piece of information indicating the design values of the three-dimensional coordinates of a reference board 152 to be identified by a reference board ID. For example, the example shown in Fig. 13 illustrates that the design values of the three-dimensional coordinates of the reference board 152 identified by the reference board ID "B001" are "X11, Y11, Z11".

The memory storage 134E of the transport control unit 134 stores, as layout data relating to the shelf 120, data having the same configuration as that of the layout data relating to the structure 150.

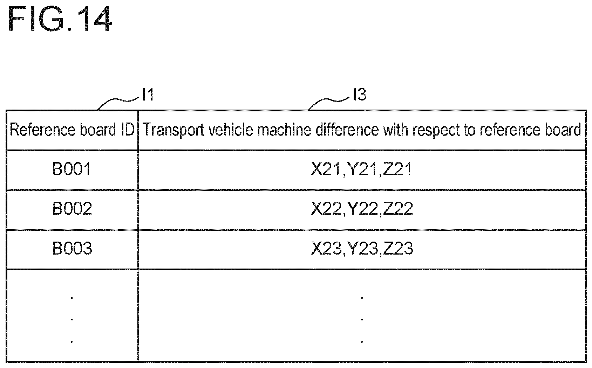

Fig. 14 is a diagram showing a configuration example of machine difference data stored in the memory storage 140F of the teaching information generator 140 and the memory storage 134E of the transport control unit 134. The memory storage 140F of the teaching information generator 140 stores a plurality of sets of machine difference data each corresponding to each of the plurality of transport vehicles 130. The machine difference data shown in Fig. 14 is a set of machine difference data corresponding to one transport vehicle 130, among the plurality of sets of machine difference data each corresponding to each of the plurality of transport vehicles 130 and stored in the memory storage 140F of the teaching information generator 140. The memory storage 134E of the transport control unit 134 stores machine difference data corresponding to the vehicle of its own. In machine difference data, reference board ID information I1 is associated with transport vehicle machine difference information I3 with respect to the reference board.

The transport vehicle machine difference information I3 with respect to the reference board is a piece of information in which a machine difference of a transport vehicle 130 is quantified as three-dimensional coordinates in the same coordinate system as the three-dimensional coordinates of the reference board 152, the machine difference being a machine difference at a time when the elevation platform 132P is at a height corresponding to the reference board 152 identified by a reference board ID. For example, the example shown in Fig. 14 illustrates that the machine difference of a transport vehicle 130 is "X21, Y21, Z21" at the time when the elevation platform 132P is at a height corresponding to the reference board 152 identified by the reference board ID "B001".

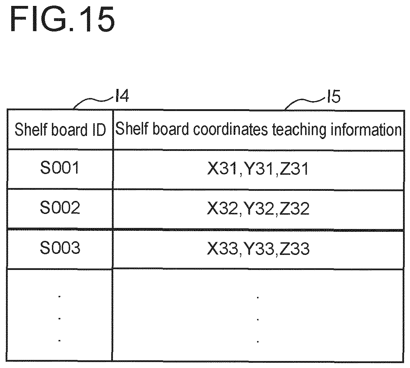

Fig. 15 is a diagram showing a configuration example of teaching data stored in the memory storage 140F of the teaching information generator 140 and the memory storage 134E of the transport control unit 134. In teaching data, shelf board ID information I4 is associated with shelf board three-dimensional coordinates teaching information I5.

The shelf board ID information I4 is a code used to identify each of the plurality of shelf boards 124. The shelf board three-dimensional coordinates teaching information I5 is a piece of information for teaching the three-dimensional coordinates of a shelf board 124 to be identified by a shelf board ID. For example, the example shown in Fig. 15 illustrates that the three-dimensional coordinates of a shelf board 124 identified by the shelf board ID "S001" are "X31, Y31, Z31".

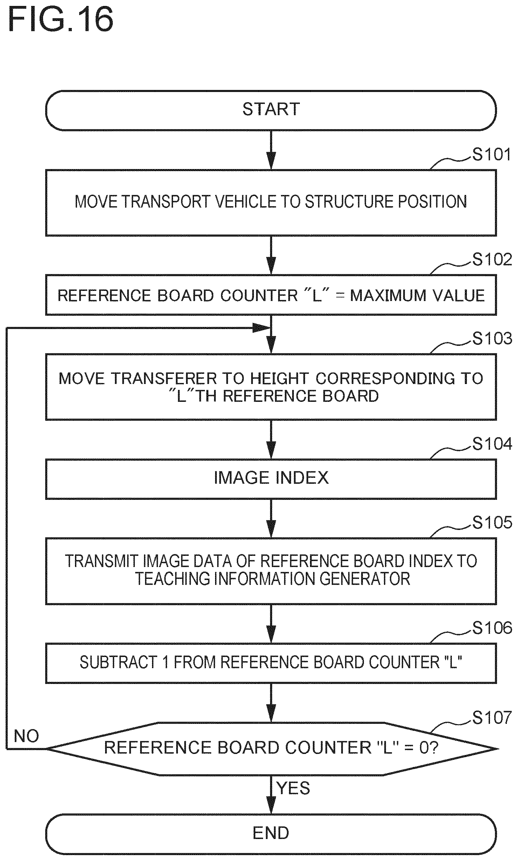

Fig. 16 is a diagram showing an operation example of capturing the index 152A and the index 152B provided on a reference board 152 of the structure 150. Each of the plurality of transport vehicles 130 performs the operations shown in Fig. 16 in order to acquire detected values of the three-dimensional coordinates of the reference board 152 as information for calculating the machine difference of the vehicle of its own. These operations are performed with the detector 170 mounted on the transferer 133 of a transport vehicle 130.

First, the transport control unit 134 of the transport vehicle 130 controls the traveler 131 of the vehicle of its own to cause the transport vehicle 130 to move to the position of the structure 150 (Step S101). In Step S101, the controller 134A of the transport control unit 134 reads out the layout data relating to the structure 150 stored in the memory storage 134E. The controller 134A generates control data for traveling to the position of the structure 150 on the basis of the layout data relating to the structure 150, and stores the control data in the memory storage 134E. The input-output device 134C then reads out the control data stored in the memory storage 134E, and outputs to the traveler 131 of the vehicle of its own a control signal corresponding to the content of the control data.

When having traveled to the position of the structure 150 in accordance with the control signal output from the transport control unit 134, the traveler 131 outputs to the transport control unit 134 a feedback signal relating to this traveling operation.

When the input-output device 134C receives an input of the feedback signal, the calculator 134B of the transport control unit 134 sets the maximum value into the reference board counter "L" for counting the number of reference boards 152 (Step S102). In Step S102, the calculator 134B reads out the layout data relating to the structure 150 stored in the memory storage 134E. On the basis of the layout data relating to the structure 150, the calculator 134B then sets the same value as the number of the reference boards 152 in the structure 150 into the reference board counter "L" as the maximum value.

Then, the transport control unit 134 controls the lift 132 of the vehicle of its own to cause the transferer 133 to move to the height corresponding to the "L"th reference board 152 (Step S103). In Step S103, the controller 134A of the transport control unit 134A reads out the layout data relating to the structure 150 stored in the memory storage 134E. On the basis of the layout data relating to the structure 150, the controller 134A generates control data for causing the transferer 133 to move to the height corresponding to the "L"th reference board 152, and stores it in the memory storage 134E. Here, the height corresponding to the "L"th reference board 152 is the height of the transferer 133 at the time of transferring an article G to the shelf board 124 at a height corresponding to the height of the "L"th reference board 152. The input-output device 134C then reads out the control data stored in the memory storage 134E, and outputs to the lift 132 of the vehicle of its own a control signal corresponding to the content of the control data.

When having ascended or descended to the height corresponding to the "L"th reference board 152 in accordance with the control signal output from the transport control unit 134, the lift 132 outputs to the transport control unit 134 a feedback signal relating to this lift operation.

When the input-output device 134C receives an input of the feedback signal, the controller 134A of the transport control unit 134 generates command data to command an imaging operation and stores it in the memory storage 134E. The communicator 134D then reads out the command data stored in the memory storage 134E and transmits it to the imaging control unit 173 of the detector 170.

Upon receiving the command data from the transport control unit 134, the imaging control unit 173 controls the imagers 172A to 172D to capture the index 152A and the index 152B provided on the "L"th reference board 152 (Step S104). In Step S104, upon the communicator 173D receiving the command data, the controller 173A of the imaging control unit 173 generates control data to control the imaging operation and stores it in the memory storage 173E. The input-output device 173C then reads out the control data stored in the memory storage 173E, and outputs to the imagers 172A to 172D control signals corresponding to the content of the control data.

When having captured the index 152A and the index 152B provided on the "L"th reference board 152, the imagers 172A to 172D output the captured image data to the imaging control unit 173.

Upon receiving an input of the image data, the input-output device 173C of the imaging control unit 173 stores the image data in the memory storage 173E.

Then, the imaging control unit 173 transmits to the teaching information generator 140 the image data obtained by capturing the index 152A and the index 152B of the reference board 152 (Step S105). In Step S105, the communicator 173D of the imaging control unit 173 reads out the image data stored in the memory storage 173E and transmits the image data to the teaching information generator 140. The communicator 173D transmits feedback data relating to this imaging operation to the transport control unit 134.

Upon receiving the image data from the imaging control unit 173, the communicator 140E of the teaching information generator 140 stores the image data in the memory storage 140F.

Upon the communicator 134D receiving the feedback data, the calculator 134B of the transport control unit 134 subtracts "1" from the value of the reference board counter "L" (Step S106).

The calculator 134B of the transport control unit 134 then determines whether the value of the reference board counter "L" is "0" (Step S107). Here, the value of the reference board counter "L" being "0" means that the index 152A and the index 152B provided on all the reference boards 152 in the structure 150 have been captured.

In this operation example, if the value of the reference board counter "L" is not "0" (Step S107; NO), the processing of Step S103 and subsequent steps will be executed again.

If the value of the reference board counter "L" is "0" (Step S107; YES), the transport control unit 134 ends the processing related to the operation example shown in Fig. 16.

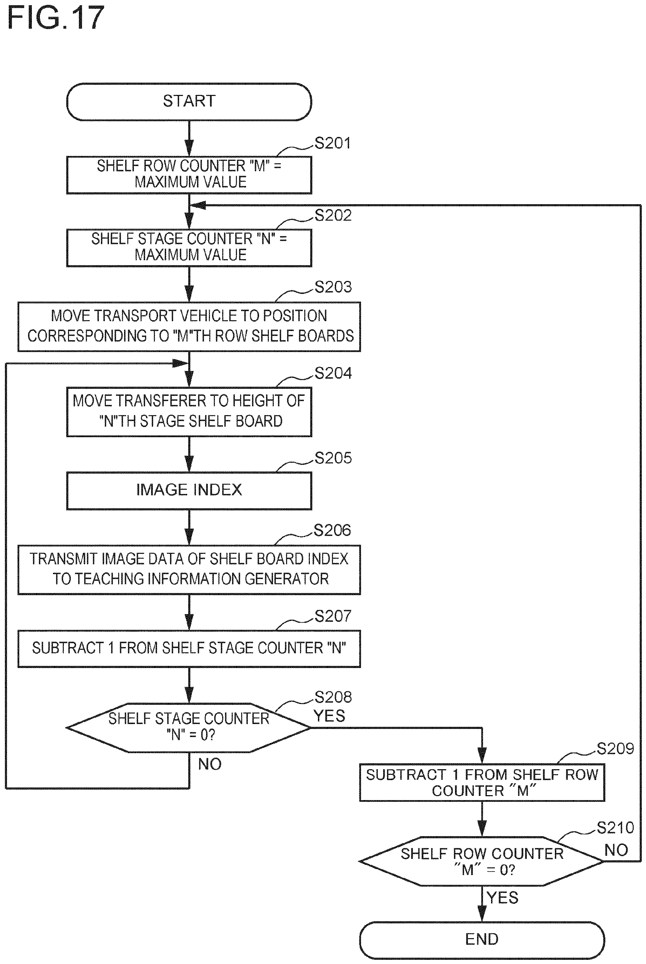

Fig. 17 is a diagram showing an operation example of capturing the index 124A and the index 124B provided on a shelf board 124 of the shelf 120. One transport vehicle 130 among the plurality of transport vehicles 130 performs operations shown in Fig. 17 in order to acquire detected values of the three-dimensional coordinates of the shelf board 124 as information for calculating teaching data relating to the transfer position in the shelf 120. These operations are performed with the detector 170 mounted on the transferer 133 of the one transport vehicle 130.

First, the calculator 134B of the transport control unit 134 sets the maximum value into the shelf row counter "M" for counting the row number of the shelf boards 124 in the shelf 120 (Step S201). In Step S201, the calculator 134B reads out the layout data relating to the shelf 120 stored in the memory storage 134E. On the basis of the layout data relating to the shelf 120, the calculator 134B then sets the same value as the row number of the shelf boards 124 in the shelf 120 into the shelf row counter "M" as the maximum value.

Then, the calculator 134B of the transport control unit 134 sets the maximum value into the shelf stage counter "N" for counting the stage number of the shelf board 124 of the "M"th row (Step S202). In Step S202, the calculator 134B reads out the layout data relating to the shelf 120 stored in the memory storage 134E. On the basis of the layout data relating to the shelf 120, the calculator 134B then sets the same value as the stage number of the shelf board 124 of the "M"th row into the shelf stage counter "N" as the maximum value.

Then, the transport control unit 134 controls the traveler 131 of the one vehicle of its own to cause the transport vehicle 130 to move to the position corresponding to the shelf boards 124 of the "M"th row (Step S203). In Step S203, the controller 134A of the transport control unit 134 reads out the layout data relating to the shelf 120 stored in the memory storage 134E. On the basis of the layout data relating to the shelf 120, the controller 134A generates control data to cause the one transport vehicle 130 to move to the position corresponding to the shelf boards 124 of the "M"th row, and stores it in the memory storage 134E. The input-output device 134C then reads out the control data stored in the memory storage 134E, and outputs to the traveler 131 of the vehicle of its own a control signal corresponding to the content of the control data.

When having traveled to the position corresponding to the shelf boards 124 of the "M"th row in accordance with the control signal output from the transport control unit 134, the traveler 131 outputs to the transport control unit 134 a feedback signal relating to this traveling operation.

Upon the input-output device 134C receiving an input of the feedback signal, the transport control unit 134 controls the lift 132 of the vehicle of its own and causes the transferer 133 to move to the height corresponding to the shelf board 124 of the "N"th stage (Step S204). In Step S204, the controller 134A of the transport control unit 134 reads out the layout data relating to the shelf 120 stored in the memory storage 134E. On the basis of the layout data relating to the shelf 120, the controller 134A generates control data for causing the transferer 133 to move to the height corresponding to the shelf board 124 of the "N"th stage, and stores it in the memory storage 134E. Here, the height corresponding to the shelf board 124 of the "N"th stage is the height of the transferer 133 at the time of transferring an article G to the shelf board 124 of the "N"th stage. The input-output device 134C then reads out the control data stored in the memory storage 134E, and outputs to the lift 132 a control signal corresponding to the content of the control data.

Upon having ascended or descended to the height corresponding to the shelf board 124 of the "N"th stage in accordance with the control signal output from the transport control unit 134, the lift 132 transmits to the transport control unit 134 a feedback signal relating to this lift operation.

Upon the input-output device 134C receiving an input of the feedback signal, the controller 134A of the transport control unit 134 generates command data to command an imaging operation and stores it in the memory storage 134E. The communicator 134D then reads out the command data stored in the memory storage 134E and transmits it to the teaching information generator 140. Upon receiving the command data from the controller 134A of the transport control unit 134, the teaching information generator 140 transmits the command data to the imaging control unit 173.

Upon receiving the command data from the teaching information generator 140, the imaging control unit 173 controls the imagers 172A to 172D to capture the index 124A and the index 124B provided on the shelf board 124 of the "N"th stage of the "M"th row (Step S205). In Step S205, when the communicator 173D receives the command data, the controller 173A of the imaging control unit 173 generates control data to control the imaging operation and stores it in the memory storage 173E. The input-output device 173C then reads out the control data stored in the memory storage 173E, and outputs to the imagers 172A to 172D control signals corresponding to the content of the control data.

Upon having captured the index 124A and the index 124B provided on the shelf board 124 of the "N"th stage of the "M"th row, the imagers 172A to 172D output the captured image data to the imaging control unit 173. Upon receiving an input of the image data, the input-output device 173C of the imaging control unit 173 stores the image data in the memory storage 173E.

Then, the imaging control unit 173 transmits to the teaching information generator 140 the image data obtained by capturing the index 124A and the index 124B of the shelf board 124 (Step S206). In Step S206, the communicator 173D of the imaging control unit 173 reads out the image data stored in the memory storage 173E and transmits the image data to the teaching information generator 140.

Upon receiving the image data from the imaging control unit 173, the communicator 140E of the teaching information generator 140 stores the image data in the memory storage 140F. The communicator 140E of the teaching information generator 140 transmits feedback data relating to this imaging operation to the transport control unit 134.

Upon the communicator 134D receiving the feedback data, the calculator 134B of the transport control unit 134 subtracts "1" from the value of the shelf stage counter "N" (Step S207).

The calculator 134B of the transport control unit 134 then determines whether the value of the shelf stage counter "N" is "0" (Step S208). Here, the value of the shelf stage counter "N" being "0" means that the index 124A and the index 124B provided on all the shelf boards 124 of the "M"th row have been captured.

In this operation example, if the value of the shelf stage counter "N" is not "0" (Step S208; NO), the processing of Step S204 and subsequent steps will be executed again.

If the value of the shelf stage counter "N" is "0" (Step S208; YES), the calculator 134B of the transport control unit 134 subtracts "1" from the value of the shelf row counter "M" (Step S209).

The calculator 134B of the transport control unit 134 then determines whether the value of the shelf row counter "M" is "0" (Step S210). Here, the value of the shelf row counter "L" being "0" means that the index 124A and the index 124B provided on the shelf boards 124 of all rows in the shelf 120 have been captured.

In this operation example, if the value of the shelf row counter "M" is not "0" (Step S210; NO), the processing of Step S202 and subsequent steps will be executed again.

If the value of the shelf row counter "M" is "0" (Step S210; YES), the transport control unit 134 ends the processing related to the operation example shown in Fig. 17.

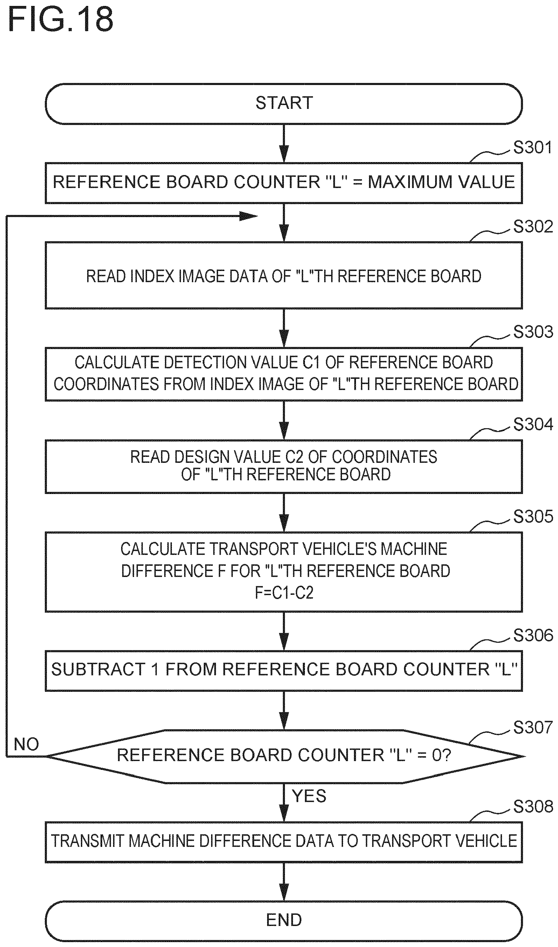

Fig. 18 is a diagram showing an operation example of performing a calculation to quantify the machine difference of a transport vehicle 130. Those operations are performed by the teaching information generator 140. In order to quantify machine difference of each of the plurality of transport vehicles 130, the teaching information generator 140 performs the operations shown in Fig. 18 for each of the plurality of transport vehicles 130. The following description describes an example of performing a calculation to quantify the machine difference of a predetermined transport vehicle 130 among the plurality of transport vehicles 130.

First, the calculator 140B of the teaching information generator 140 sets the maximum value into the reference board counter "L" to count the number of reference boards 152 (Step S301). In Step S301, the calculator 140B reads out the layout data relating to the structure 150 stored in the memory storage 140F. On the basis of the layout data relating to the structure 150, the calculator 140B then sets the same value as the number of the reference boards 152 in the structure 150 into the reference board counter "L" as the maximum value.

The calculator 140B then reads out, from the memory storage 140F, image data in which the index 152A and the index 152B of the "L"th reference board 152 are captured using the predetermined transport vehicle 130 (Step S302).

Then, from the image data of the index 152A and the index 152B of the "L"th reference board 152, the calculator 140B calculates a detection value C1 of the three-dimensional coordinates of the reference board 152 (Step S303). In Step S303, the calculator 140B calculates the detection value C1 of the three-dimensional coordinates of the reference board 152 by means of the stereo imaging method, for example.

The calculator 140B then reads out a design value C2 of the three-dimensional coordinates of the "L"th reference board 152 (Step S304). In Step S304, the calculator 140B reads out the layout data relating to the structure 150 stored in the memory storage 140F. The calculator 140 then specifies the design value C2 of the three-dimensional coordinates of the "L"th reference board 152 from the layout data of the structure 150.

Then, the calculator 140B performs a calculation to quantify the machine difference F of the predetermined transport vehicle 130 with respect to the "L"th reference board 152 (Step S305). In Step S305, as the machine difference F of the predetermined transport vehicle 130, the calculator 140B yields a value obtained by subtracting, from the detection value C1 of the "L"th reference board 152, the design value C2 of the three-dimensional coordinates of the reference board 152. Then, the calculator 140B updates the value of the machine difference F for the "L"th reference board 152 in the machine difference data relating to the machine difference of the predetermined transport vehicle 130 stored in the memory storage 140F.

The calculator 140B subtracts "1" from the value of the reference board counter "L" (Step S306).

The calculator 140B then determines whether the value of the reference board counter "L" is "0" (Step S307). Here, the value of the reference board counter "L" being "0" means that the machine differences of the predetermined transport vehicle 130 with respect to all reference boards 152 in the structure 150 have been quantified.

In this operation example, if the value of the reference board counter "L" is not "0" (Step S307; NO), the processing of Step S302 and subsequent steps will be executed again.

If the value of the reference board counter "L" is "0" (Step S307; YES), the communicator 140E of the teaching information generator 140 transmits the machine difference data to the predetermined transport vehicle 130 (Step S308). In Step S308, the communicator 140E reads out the machine difference data relating to the machine difference of the predetermined transport vehicle 130 stored in the memory storage 140F. The communicator 140E then transmits to the transport control unit 134 of the predetermined transport vehicle 130 the machine difference data relating to the machine difference of the predetermined transport vehicle 130.

Then, the teaching information generator 140 ends the processing relating to the operation example shown in Fig. 18.

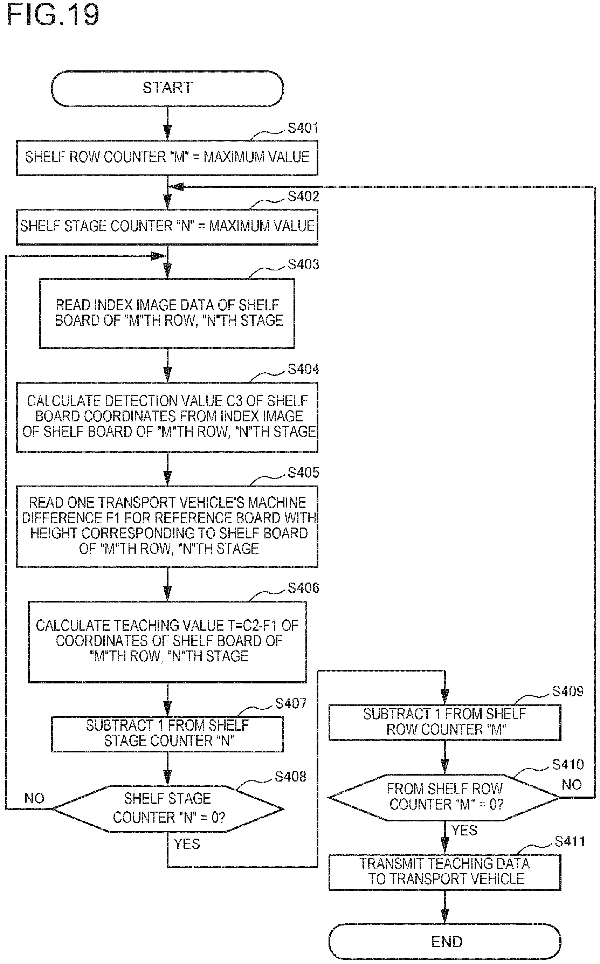

Fig. 19 is diagram showing an operation example of calculating teaching information relating to a transfer position in the shelf 120. The teaching information generator 140 performs the operations shown in Fig. 19 in order to calculate teaching information relating to the transfer position in the shelf 120 referenced in each of the plurality of transport vehicles 130. The teaching information generator 140 calculates teaching information using the images of the index 124A and the index 124B captured through the operations shown in Fig. 17 by one transport vehicle 130 of the plurality of transport vehicles 130.

First, the calculator 140B of the teaching information generator 140 sets the maximum value into the shelf row counter "M" to count the row number of the shelf boards 124 in the shelf 120 (Step S401). In Step S401, the calculator 140B reads out layout data relating to the shelf 120 stored in the memory storage 140F. On the basis of the layout data relating to the shelf 120, the calculator 140B then sets the same value as the row number of the shelf boards 124 in the shelf 120 into the shelf row counter "M" as the maximum value.

Then, the calculator 140B sets the maximum value into the shelf stage counter "N" to count the stage number of the shelf board 124 of the "M"th row (Step S402). In Step S402, the calculator 140B reads out the layout data relating to the shelf 120 stored in the memory storage 140F. On the basis of the layout data relating to the shelf 120, the calculator 140B sets the same value as the stage number of the shelf board 124 of the "M"th row into the shelf stage counter "N" as the maximum value.

The calculator 140B then reads out, from the memory storage 140F, the image data in which the index 124A and the index 124B of the shelf board 124 of the "N"th stage of the "M"th row are captured (Step S403).

Then, from the image data of the index 124A and the index 124B of the shelf board 124 of the "N"th stage of the "M"th row, the calculator 140B calculates a detection value C3 of the three-dimensional coordinates of the shelf board 124 (Step S404). In Step S404, the calculator 140B calculates the detection value C3 of the three-dimensional coordinates of the shelf board 124 of the "N"th stage of the "M"th row by means of the stereo imaging method, for example.

Then, the calculator 140B reads out the machine difference F1 of the one transport vehicle 130 with respect to the reference board 152 having a height corresponding to the shelf board 124 of the "N"th stage of the "M"th row (Step S405). Here, the one transport vehicle 130 is a transport vehicle 130 used to image the index 124A and the index 124B of the shelf board 124. In Step S405, the calculator 140B reads out the machine difference data relating to the machine difference F1 of the one transport vehicle 130 stored in the memory storage 140F. Then, from the machine difference data relating to the machine difference F1 of the one transport vehicle 130, the calculator 140B specifies the machine difference F1 of the one transport vehicle 130 with respect to the reference board 152 having a height corresponding to the shelf board 124 of the "N"th stage of the "M"th row.

The calculator 140B then calculates the teaching value T of the three-dimensional coordinates of the shelf board 124 of the "N"th stage of the "M"th row (Step S406). As the teaching value T, the calculator 140B yields a value obtained by subtracting, from the detection value C3 of the three-dimensional coordinates of the shelf board 124 of the "N"th stage of the "M"th row, the machine difference F1 of the one transport vehicle 130 with respect to the reference board 152 at a height corresponding to the shelf board 124. The calculator 140B then updates the teaching value T of the three-dimensional coordinates of the shelf board 124 of the "N"th stage of the "M"th row, in the teaching data stored in the memory storage 140F.

The calculator 140B subtracts "1" from the value of the shelf stage counter "N" (Step S407).

The calculator 140B then determines whether the value of the shelf stage counter "N" is "0" (Step S408). Here, the value of the shelf stage counter "N" being "0" means that the teaching values T of the three-dimensional coordinates of all the shelf boards 124 of the "M"th row have been calculated.

In this operation example, if the value of the shelf stage counter "N" is not "0" (Step S408; NO), the processing of Step S403 and subsequent steps will be executed again.

If the value of the shelf stage counter "N" is "0" (Step S408; YES), the calculator 140B subtracts "1" from the value of the shelf row counter "M" (Step S409).

Then, the calculator 140B determines whether the value of the shelf row counter "M" is "0" (Step S410). Here, the value of the shelf row counter "M" being "0" means that the teaching values T of the three-dimensional coordinates of the shelf boards 124 of all rows in the shelf 120 have been calculated.

In this operation example, if the value of the shelf row counter "M" is not "0" (Step S410; NO), the processing of Step S402 and subsequent steps will be executed again.

If the value of the shelf row counter "M" is "0" (Step S410; YES), the communicator 140E of the teaching information generator 140 transmits the teaching data to the transport vehicles 130 (Step S411). In Step S411, the communicator 140E reads out the teaching data relating to the transfer position in the shelf 120 stored in the memory storage 140F. The communicator 140E transmits to the transport control unit 134 of all transport vehicles 130 teaching data relating to the transfer position in the shelf 120.

Then, the teaching information generator 140 ends the processing relating to the operation example shown in Fig. 19.

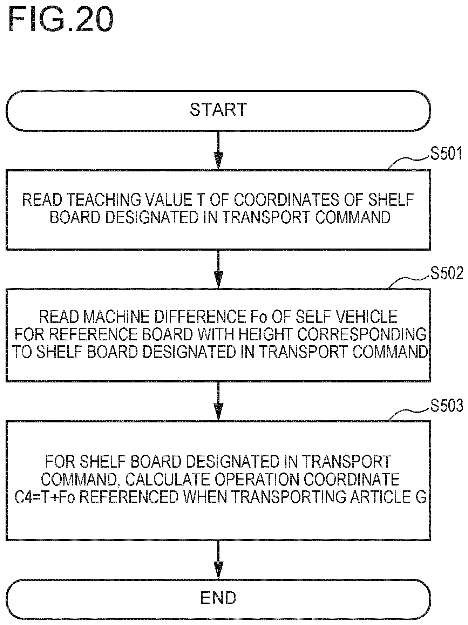

Fig. 20 is a diagram showing an operation example of calculating three-dimensional coordinates of the shelf board 124 to be referenced when transporting an article G. Upon receiving a transport command from the on-ground controller 160 to transport an article G, the transport control unit 134 of a transport vehicle 130 performs the operations shown in Fig. 20, and calculates the three-dimensional coordinates of the shelf board 124 designated in the transport command.

Upon the communicator 134D receiving the transport command from the on-ground controller 160, the calculator 134B of the transport control unit 134 reads out the teaching value T of the three-dimensional coordinates of the shelf board 124 designated in the transport command (Step S501). In Step S501, the calculator 134B reads out teaching data relating to the transfer position in the shelf 120 stored in the memory storage 134E. The calculator 134B then specifies, from the teaching data relating to the transfer position in the shelf 120, the teaching value T of the three-dimensional coordinates of shelf board 124 designated in the transport command.

Then, the calculator 134B reads out a machine difference Fo of the vehicle of its own with respect to the reference board 152 having a height corresponding to the shelf board 124 designated in the transport command (Step S502). In Step S502, the calculator 134B reads out the machine difference data relating to the machine difference Fo of the vehicle of its own stored in the memory storage 134E. Then, the calculator 134B specifies, from the machine difference data relating to the machine difference Fo of the vehicle of its own, the machine difference Fo of the vehicle of its own with respect to the reference board 152 having the height corresponding to the shelf board 124 designated in the transport command.

Then, the calculator 134B calculates operation coordinates C4 to be referenced when transporting an article G, for the shelf board 124 designated in the transport command (Step S503), and ends the processing relating to the operation example shown in Fig. 20. The calculator 134B yields, as the operation coordinates C4, a value obtained by adding the teaching value T of the three-dimensional coordinates of a shelf board 124 designated in the transport command and the machine difference Fo of the vehicle of its own with respect to the reference board 152 having the height corresponding to the shelf board 124.

The transport control unit 134 of the transport vehicle 130 uses the calculated operation coordinates C4 to execute transport control in accordance with the transport command.

As described above, a transport vehicle system 100 includes a shelf 120 that includes a shelf board 124 on which an article G is placed. The transport vehicle system 100 includes a plurality of transport vehicles 139 each including a transferer 133 that travels on a track 110 provided on a ceiling C and transfers an article G onto the shelf board 124. The transport vehicle system 100 includes a detector 170 that is supported by the transferer 133 and detects the shelf board 124. The transport vehicle system 100 include a teaching information generator 140 that generates teaching information relating to a transfer position on the shelf board 124, using a result of detecting the shelf board 124 yielded by the detector 170. The transport vehicle system 100 includes a structure 150 to measure machine differences for the plurality of transport vehicles 130. The structure 150 includes an index 152A and an index 152B that are suspended from the track 110 or the ceiling C and can be detected by the detector 170. According to this embodiment, even if the timing for measuring the machine difference for each transport vehicle 130 varies and the height of the track 110 changes at each timing according to the situation of the building, it is possible to measure and quantify the machine difference under the same conditions for each transport vehicle 130.

The detector 170 is detachably supported by the transferer 133. According to this embodiment, the transport vehicle 130 can be operated with the detector 170 removed.

The shelf 120 is provided on the floor F. According to this embodiment, the load applied to the track 110 or the ceiling C can be suppressed compared to the mode in which the shelf 120 is suspended from the track 110 or the ceiling C.

The transport vehicle system 100 includes an anti-sway mechanism 180 to prevent horizontal swaying of a lower part of the structure 150. According to this embodiment, it is possible to prevent the detection of the index 152A and the index 152B from being hindered due to the swaying of the structure 150.

The anti-sway mechanism 180 includes a bracket 181A and a bracket 181B fixed to the floor F. The anti-sway mechanism 180 includes rollers 182A to 182J arranged between the brackets 181A, 181B and the structure 150. The anti-sway mechanism 180 allows the structure 150 to move in the up-down direction relative to the bracket 181A and the bracket 181B. According to this embodiment, even if the height of the track 110 changes, it is possible to suppress unnecessary force from being applied to the structure 150.

The detector 170 includes a plurality of imagers 172A to 172D. The plurality of imagers 172A to 172D capture images of the index 152A and the index 152B from positions different from each other. According to this embodiment, it is possible to perform calculation using the stereo imaging method.

The teaching information generator 140 generates teaching information by correcting a result of detecting the shelf board 124 yielded by the detector 170 in one transport vehicle 130, using the machine difference of the one transport vehicle 130. According to this embodiment, in a plurality of transport vehicles 130 including the one transport vehicle 130, it is possible to use teaching information that is not affected by the machine difference of the one transport vehicle 130.

The structure 150 includes a strut 151 suspended from the track 110. The structure 150 includes a plurality of reference boards 152 extending horizontally from the strut 151. Each of the plurality of reference boards 152 is provided at a position corresponding to a height of a shelf board 124. The index 152A and the index 152B are provided on each of the plurality of reference boards 152. According to this embodiment, it is possible to generate teaching information individually corresponding to each shelf board 124.

The track 110 includes a transport route 111 along which the transport vehicle 130 transports an article G. The track 110 includes an extension route 112 extending away from the transport route 111. The structure 150 is provided at a position corresponding to a part of the extension route 112. According to this embodiment, it is possible to prevent provision of the structure 150 from posing a limitation on the region where the shelf 120 is provided.

A specific region A for performing maintenance on the transport vehicle 130 is provided in a region including a part of the extension route 112. The structure 150 is provided in the specific area A. According to this embodiment, when maintenance has been performed on the transport vehicle 130, it is possible to re-detect the index 152A and the index 152B in the specific region A where the maintenance was performed.

The present invention has been described through the above embodiments. However, the technical scope of the invention is not limited to the description of the above embodiments. It is apparent to those skilled in the art that various modifications or improvements can be added to the above embodiments. It is also apparent from the scope of claims that the present invention also encompasses one or more of such modifications or improvements. The contents of Japanese Patent Application No. 2021-104694 and all documents cited in the detailed description of the present invention are incorporated herein by reference to the extent permitted by law.

For example, in the above embodiments, the structure 150 is suspended from the track 110. The structure 150 may be suspended from the ceiling C instead of the above embodiment. In such an embodiment, the strut 151 of the structure 150 may be suspended from the ceiling C.

### Description of Reference Signs

- 100:: Transport vehicle system
- 110:: Track
- 111:: Transport route
- 112:: Extension route
- 120:: Shelf
- 121:: Bottom board
- 122:: Back board
- 123:: Side board
- 124:: Shelf board
- 124A:: Index
- 124B:: Index
- 130:: Transport vehicle
- 131:: Traveler
- 132:: Lift
- 132M:: Mast
- 132P:: Elevation platform
- 133:: Transferer
- 134:: Transport control unit
- 134A:: Controller
- 134B:: Calculator
- 134C:: Input-output device
- 134D:: Communicator
- 134E:: Memory storage
- 140:: Teaching information generator
- 140A:: Controller
- 140B:: Calculator
- 140C:: Input device
- 140D:: Output device
- 140E:: Communicator
- 140F:: Memory storage
- 150:: Structure
- 151:: Strut
- 152:: Reference board
- 153:: Roller
- 153A:: Rotation axle
- 154:: Plate
- 155:: Plate
- 152A:: Index
- 152B:: Index
- 160:: On-ground controller
- 170:: Detector
- 171:: Housing
- 171S:: Opposing face
- 172A:: Imager
- 172B:: Imager
- 172C:: Imager
- 172D:: Imager
- 173:: Imaging control unit
- 173A:: Controller
- 173B:: Calculator
- 173C:: Input-output device
- 173D:: Communicator
- 173E:: Memory storage
- 180:: Anti-sway mechanism
- 181:: Bracket
- 182:: Roller
- 182A:: Rotation axle
- A:: Specific region
- C:: Ceiling
- F:: Floor
- G:: Article
- H:: Hanging hooks
- I1:: Reference board ID information
- I2:: Reference board coordinates design value information
- 13:: Transport vehicle machine difference information with respect to reference board
- 14:: Shelf board ID information
- 15:: Shelf board coordinates teaching information

## Claims

1. A transport vehicle system comprising
a shelf that includes a shelf board on which an article is placed;
a plurality of transport vehicles each including a transferer that travels on a track provided on a ceiling and transfers an article onto the shelf board;
a detector that is supported by the transferer and detects the shelf board;
a teaching information generator that generates teaching information relating to a transfer position on the shelf board, using a result of detecting the shelf board yielded by the detector; and
a structure to measure machine differences for the plurality of transport vehicles,
wherein the structure includes an index that is suspended from the track or the ceiling and can be detected by the detector.

2. The transport vehicle system according to claim 1,
wherein the detector is detachably supported by the transferer.

3. The transport vehicle system according to claim 1 or 2,
wherein the shelf is provided on a floor.

4. The transport vehicle system according to any one of claims 1 to 3, comprising an anti-sway mechanism to prevent horizontal swaying of a lower part of the structure.

5. The transport vehicle system according to claim 4,
wherein the anti-sway mechanism includes
a bracket fixed to the floor, and
a roller arranged between the bracket and the structure, and
wherein the structure is allowed to move in an up-down direction relative to the bracket.

6. The transport vehicle system according to any one of claims 1 to 5,
wherein the detector includes a plurality of imagers, and
wherein the plurality of imagers capture images of the index from positions different from each other.

7. The transport vehicle system according to any one of claims 1 to 6,
wherein the teaching information generator generates the teaching information by correcting a result of detecting the shelf board yielded by the detector in one transport vehicle, using the machine difference of the one transport vehicle.

8. The transport vehicle system according to any one of claims 1 to 7,
wherein the structure includes
a strut suspended from the track or the ceiling, and
a plurality of reference boards extending horizontally from the strut,
wherein each of the plurality of reference boards is provided at a position corresponding to a height of the shelf board, and
wherein the index is provided on each of the plurality of reference boards.

9. The transport vehicle system according to any one of claims 1 to 8,
wherein the track includes
a transport route along which the transport vehicle transports an article, and
an extension route extending away from the transport route, and
wherein the structure is provided at a position corresponding to a part of the extension route.

10. The transport vehicle system according to claim 9,
wherein a specific region for performing maintenance on the transport vehicle is provided in a region including a part of the extension route, and
wherein the structure is provided in the specific region.
